(19) Europäisches Patentamt
European Patent Office
Office européen des brevets

(11) **EP 3 139 072 B1**

(12) **EUROPEAN PATENT SPECIFICATION**

(45) Date of publication and mention
of the grant of the patent:
**13.12.2023   Bulletin 2023/50**

(51) International Patent Classification (IPC):
**F16J 15/34** (2006.01)      **B63H 23/32** (2006.01)
**G08B 21/18** (2006.01)

(21) Application number: **16187264.3**

(52) Cooperative Patent Classification (CPC):
**F16J 15/3492;** B63H 23/321

(22) Date of filing: **05.09.2016**

(54) **APPARATUS FOR MONITORING ONE OR MORE COMPONENTS OF A PROPULSION SYSTEM OF A WATERCRAFT**

VORRICHTUNG ZUR ÜBERWACHUNG EINER ODER MEHR KOMPONENTEN EINES PROPULSIONSSYSTEMS EINES WASSERRAHTS

APPAREIL DE SURVEILLANCE D'UN OU PLUSIEURS COMPOSANTS D'UN SYSTÈME DE PROPULSION D'UN WATERCRAFT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **07.09.2015   IT UB20153439**

(43) Date of publication of application:
**08.03.2017   Bulletin 2017/10**

(73) Proprietor: **Microtem Srl**
**19126 La Spezia (SP) (IT)**

(72) Inventors:
• **Chiodetti, Mattia**
**54010 Podenzana (IT)**
• **Valenti, Luca**
**19123 La Spezia ( (IT)**

(74) Representative: **Bottino, Giovanni**
**ARBO Srl**
**Via Colombo, 11/29**
**16121 Genova (IT)**

(56) References cited:
**EP-A1- 0 895 010      EP-A2- 0 288 979**
**DE-A1- 19 724 308     GB-A- 2 247 724**
**GB-A- 2 430 034       US-A1- 2012 130 688**
**US-B1- 6 615 639      US-B2- 6 626 436**

**Description**

The present invention relates to an apparatus for monitoring one or more components of a watercraft propelling system, at least one of said components being composed of a mechanical seal device of a drive shaft extending through an opening in the watercraft hull, said device being intended to prevent water from leaking inside said hull through said opening, said drive shaft being rotatable about an axis of rotation coinciding with its longitudinal axis.

Such a monitoring apparatus is for example known from document US6615639.

The propelling system of a watercraft typically comprises a series of mechanical components from the engine to the propeller, passing through the opening in the hull.

The good operation of the whole propelling system needs all the components to be in their proper operating condition. However since mechanical components are subject to wear and mainly because they are in a quite aggressive environment such as the marine one, or aquatic environment generally, they can be subjected to failures that can result in high dangerous situations if are not recognized and directly or indirectly solved at the right time.

One of the most important components of the propelling system is the mechanical seal device. It comprises a stationary part connectable to said hull and a rotary part, coupled so as to rotate to said stationary part and integrally to said drive shaft. The stationary part and the rotary part are provided with a stationary annular sliding element and a rotary annular sliding element, which annular sliding elements are provided each one with a planar contact face, and the two contact faces being coplanar and in contact with each other.

Mechanical seals are mechanical devices subjected to high mechanical stresses, above all due to the parts rubbing together but also to vibrations, misalignments etc., and can therefore lead to failures and wear.

Known seals are currently produced and installed with the indication by the manufacturer of the number of operating hours guaranteed without failures. Such value is calculated on the basis of the material used, the forces involved, operating modes and performed tests.

However once the mechanical seal is installed and used it is not possible to know if an operating change has occurred that can change the operating status from its ideal condition, therefore affecting the residual life time of the mechanical seal.

Such characteristic results in that a failure of the mechanical seal, with a consequent dangerous water leakage, can be handled only later, with all the risks it involves, or by means of frequent and therefore expensive overhauls.

Therefore currently there is the unsatisfied need for a monitoring apparatus able to acquire operating data from the components of a propelling system and that allows its operating condition to be evaluated and the residual life time to be estimated.

The present invention aims at achieving such objects by an apparatus as described hereinbefore, which further comprises a controller and a plurality of sensors for detecting operating parameters of said one or more components and for generating corresponding control signals, which control signals are transmitted to the controller.

Thus the components are monitored by a plurality of sensors, each one detecting a specific physical quantity involved in the operation of the component. Signals generated by the sensors are collected by a controller allowing the component operation to be checked, in some cases also in real-time.

This allows both the trend of the individual parameters to be evaluated, for detecting possible abnormal conditions, and estimates about the residual life time to be carried out, above all in the case of mechanical seal.

Sensors are preferably applied to the component, such as for example the case of the mechanical seal device.

According to one embodiment sensors detecting the operating parameters of the mechanical seal comprise an axial vibration sensor, a radial vibration sensor, a wear sensor for the contact faces, a sensor for the temperature of the sliding surfaces and sensor for the revolutions of said drive shaft.

According to a further embodiment the device further comprises a flushing fluid circuit for lubricating and cooling the annular sliding elements.

According to one embodiment, sensors for detecting operating parameters of the flushing circuit comprise a flushing fluid pressure sensor, a flushing fluid temperature sensor and a flushing fluid flow rate sensor.

The monitoring of the flushing circuit contemporaneously with the monitoring of the mechanical seal allows behaviors and therefore possible abnormal conditions of the two components to be identified with higher accuracy, above all in the marine field of reference. Typically the flushing fluid is water for instance taken from sea and used for cooling the engine, which water is conveyed, after being in turn cooled in a heat exchanger, to the mechanical seal for lubrication and cooling. Usually the flushing circuit is of the open type, namely water after lubricating the mechanical seal is conveyed in a hydrodynamic bearing that acts as a support for the drive shaft in the opening of the hull, in such bearing the water itself acts as a support for the shaft while flowing to the outside, where it is finally released. Hydrodynamic bearings generally have helical or longitudinal grooves where the water penetrates and runs towards the outlet. If the watercraft remains still for a long time vegetation can grow externally and spontaneously which can obstruct the outlets of the grooves, since the bearing remains always under the surface of the water. In case of obstruction, even a partial one, the bearing is not able to properly discharge water anymore, and for example this can lead to an increase in pressure in the flushing circuit, that can lead to failures in the mechanical seal. As an alternative, if the flushing circuit has an abnormal condition and it cannot supply water to the seal and/or to the hydrodynamic bearing, the pressure of the circuit can decrease and burning of the mechanical seal can occur due to an insufficient lubrication.

In one embodiment, at least one of the components is composed of a reduction unit for the revolutions of the engine and sensors comprise sensors for detecting operating parameters of the reduction unit.

In one embodiment the reduction unit is of the oil bath type and sensors for detecting operating parameters of the reduction unit comprise a sensor for solid parts suspended in oil.

In one embodiment at least one of said components is composed of a joint connecting the drive shaft to the reduction unit and the sensors comprise sensors for detecting operating parameters of the joint.

In one embodiment sensors for detecting operating parameters of the joint comprise an alignment sensor, a vibration sensor and a temperature sensor.

In a further embodiment the controller comprise a comparing unit for comparing values taken by each control signal with corresponding threshold value or ranges of reference and for generating an alarm signal if values exceed threshold values and/or fall out from reference ranges.

This allows possible abnormal conditions to be detected by comparing each value with threshold values and/or reference ranges. Threshold values and/or reference values can be set in the manufacturing phase or installation phase, or can be set by the user. It is possible to provide ranges related to different critical levels, for instance to identify slight dangerous situations or very dangerous situations.

In one embodiment, there is provided a display for displaying a graphic panel showing said values and the estimated value of the residual time of operating life, the values being highlighted in a predetermined mode in the cases when the alarm signal generated by the comparing unit is active.

In a preferred embodiment, values are displayed in predetermined fields and are highlighted by colouring such fields depending on the possible detected abnormal condition and on the severity thereof. Thus with no alarm signal the field for example is green, while the generated alarm signal can set the colour of the field to yellow or red depending on the severity of the abnormal condition.

In one embodiment the controller comprises control means for an engine that is part of the propelling system, the controller being configured such to control the engine on the basis of the values taken by the control signals.

This allows a feedback mechanism to be created that, on the basis of the operating conditions of the different components of the propelling system detected by the sensors, controls the engine such to regulate its activity in such a manner to guarantee safety. For example this can lead to stop the engine, or to limit it to a maximum number of revolutions.

According to an improvement there are provided means for the user to validate the means controlling the engine, such that the user on the basis of the values displayed on the graphic panel can give the consent to the engine control means.

This allows an indicator, preferably in the graphic panel, to be turned on for example a warning and/or flashing light, if an alarm signal is active, and the user can give the consent to the system for acting on the engine. Typically the engine is handled by its dedicated electronic unit, therefore the controller of the monitoring unit of the present invention interfaces such dedicated unit to control the engine.

According to a preferred embodiment the propelling system comprises an inflatable gasket placed about the drive shaft at the opening and means for activating the inflatable gasket by the controller, the controller being set such that, in case of failure detected by the comparing unit, the controller sets to zero the revolutions of the engine by means of the control means and operates the inflation of the inflatable gasket by the activation means, in this particular case, activatable in case of a severe failure such as for example the failure of the mechanical seal device with consequent water entering the hull, the system allows the watercraft to be put in complete safety, by operating the inflatable gasket. This is possible by controlling the engine by means of the controller, that stops the engine and therefore the rotation of the drive shaft before inflating the gasket, such not to damage it and such to guarantee an optimal sealing effect.

According to the invention, the controller is set such to carry out an estimate of the residual time of the operating life of the mechanical seal device on the basis of the received control signals.

This has the great advantage of evaluating when the current operating conditions of the mechanical seal affect the expectation of the operating life of the seal. If a series of control signals are detected which can be related to a normal or ideal operating condition, the residual time will be the one calculated in the seal manufacturing phase, obviously considering the operating time already used by the seal. If on the contrary some signals denote an abnormal behavior of the seal, the residual time decreases depending on the severity of the abnormal condition, and therefore it is estimated on the basis of the values taken by the control signals.

In one embodiment the estimated value of the residual time of the operating life of the mechanical seal device is displayed in said graphic panel.

In a further embodiment the controller comprises a memory unit where the values taken by the control signals are stored, and the estimate of the residual time of the operating life of the mechanical seal device being performed on the basis of said values within a predetermined period.

By storing data, it is possible to estimate the residual life time on the basis of the operation of the mechanical seal within a period of predetermined length preceding the current measurement.

According to an improvement, said controller comprises means for the user to set said period.

Thus the user can act on the length of the period on which the estimate of the residual time of the operating life is performed. If the period is shortened close to the current measurement, the estimate will be affected only by the recent behavior of the seal. If on the contrary the period is extended more in the past, the estimate will be affected by the behavior of the seal in a longer period of time.

The present invention relates also to a mechanical seal device for a drive shaft extending through an opening in the watercraft hull, said device being intended to prevent water from leaking inside said hull through said opening, said drive shaft being rotatable about an axis of rotation coinciding with its own longitudinal axis, which device comprises a stationary part connectable to said hull and a rotary part, coupled so as to rotate to said stationary part and integrally to said drive shaft, the stationary part and the rotary part are provided with a stationary annular sliding element and a rotary annular sliding element respectively, which annular sliding elements are provided each one with a planar contact face, and the two contact faces being coplanar and in contact with each other, which device comprises a plurality of sensors for detecting operating parameters and for generating corresponding control signals, which control signals are transmitted to a controller.

The present invention further relates to a method for monitoring one or more components of a watercraft propelling system, at least one of said components being composed of a mechanical seal device as described hereinbefore, which method provides to acquire control signals and to compare the values taken by each control signal with corresponding threshold value or ranges of reference, for generating an alarm signal if values exceed threshold values and/or fall out from reference ranges.

In one embodiment an engine, being part of the propelling system, is controlled on the basis of the values taken by the control signals.

In one embodiment, the values taken by each control signal are displayed and a user, on the basis of the displayed values, can give the consent to control the engine.

In one embodiment the propelling system comprises an inflatable gasket and in case of a detected abnormal condition, the revolutions of the engine are set to zero and the inflation of the inflatable gasket is operated.

In one embodiment the control signals comprise an axial vibration signal, a radial vibration signal, a wear signal of the contact faces, a temperature signal of the sliding surfaces, a signal of revolutions of said drive shaft.

As an alternative or in combination, the control signals comprise a flushing fluid pressure signal, a flushing fluid temperature signal, a flushing fluid flow rate signal.

As an alternative or in combination control signals comprise a signal of the presence and quantity of solid parts suspended in the oil of the reduction unit.

As an alternative or in combination the control signals comprise an alignment signal, a vibration signal and a temperature signal for the joint.

In a further embodiment the residual time of the operating life of the mechanical seal device is estimated on the basis of the received control signals.

According to an improvement, the estimate of the residual time of the operating life of the mechanical seal device uses a transfer function composed of the sum of a number of computation blocks equal to the number of the quantities under examination, wherein each computation block is related to a specific physical quantity and is composed of a multiplication of a first factor comprising a nonlinear combination of all the physical quantities with a second factor about the physical quantity under examination.

These and other characteristics and advantages of the present invention will be more clear from the following description of some non-limitative embodiments shown in the annexed drawings where:

Fig.1 is a diagram of the apparatus of the present invention;
Fig.2 is a detailed diagram of the part specifically dedicated to the mechanical seal and flushing circuit;

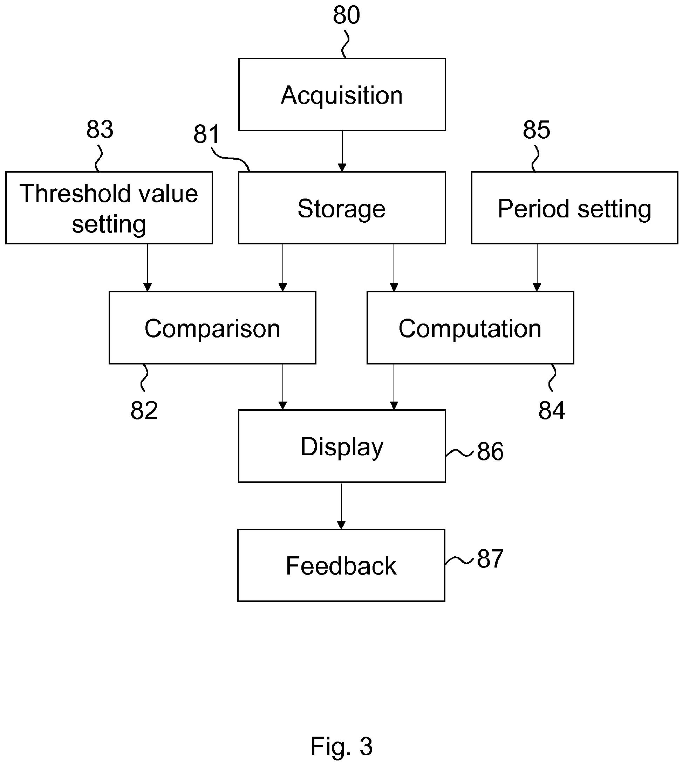

fig. 3 is a diagram of the method of the present invention.

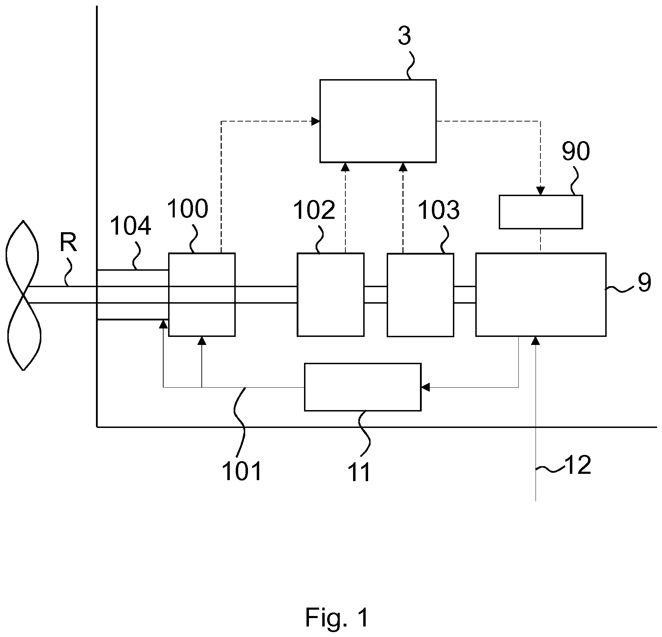

Figure 1 shows a diagram of the apparatus monitoring the propelling system of a watercraft. The propelling system comprises a drive shaft (R) extending through an opening in the hull of a watercraft and on which a mechanical seal device 100 performs hydraulic sealing effect. In the opening of the hull and for a predetermined length in the direction of the mechanical seal 100, the drive shaft is supported by a hydrodynamic bearing 104.

There are further provided a reduction unit 103 that reduces the revolutions of the engine 9 to a number of revolutions suitable for the drive shaft R and therefore for the propeller, and a joint 102 connecting the drive shaft R to the reduction unit 103. Therefore the engine 9 drives the drive shaft R by the joint 102 and the reduction unit 103.

There is further provided a flushing circuit 101 for lubricating and cooling the mechanical seal 100 and/or the hydrodynamic bearing 104. The flushing liquid is water taken by the watercraft through a port 12 and used firstly for cooling the engine 9. Then water passes in a heat exchanger 11 where it is cooled and it is provided through a pump to the mechanical seal 100 and/or to the hydrodynamic bearing 104. The flushing water therefore flows out through the hydrodynamic bearing 104.

There is provided a controller 3 and a plurality of sensors for detecting operating parameters of the different components, in particular of the mechanical seal 100, the flushing circuit 101, the joint 102 and the reduction unit 103.

The reduction unit 103 is of the oil bath type and sensors for detecting operating parameters of the reduction unit 103 comprise a sensor of solid parts suspended in oil. Sensors for detecting operating parameters of the joint 102 on the contrary comprise an alignment sensor, a vibration sensor and a temperature sensor.

Such as seen in figure 1 and as disclosed below in more details, the controller 3 collects signals from different components, and on the basis of a processing of the received signals it controls the engine 9 by interfacing with the dedicated controller 90 of the engine 9.

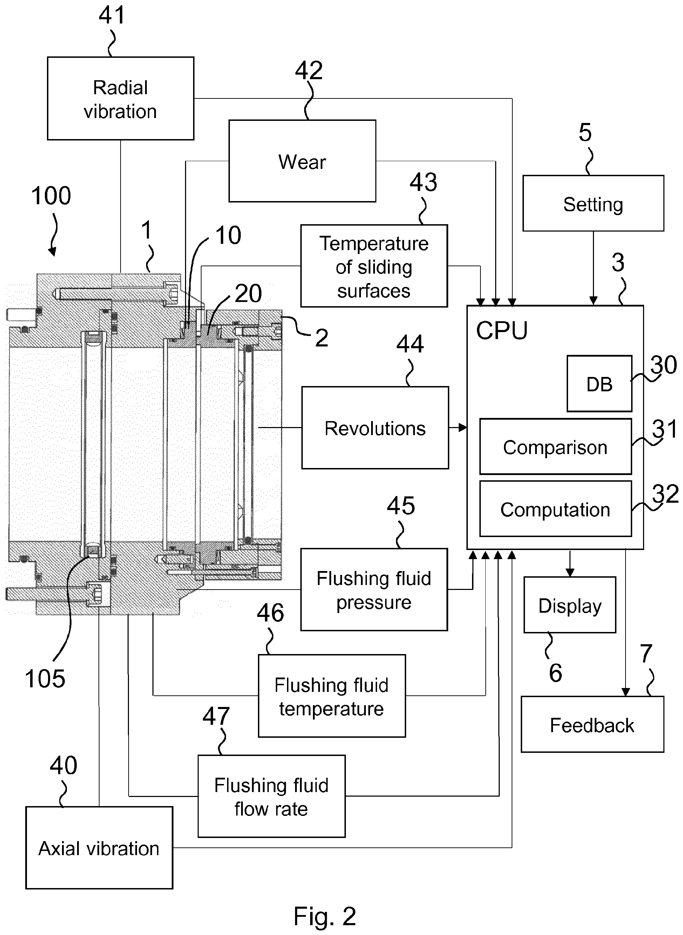

Figure 2 shows an embodiment of a mechanical seal device 100 for the drive shaft (R), intended to prevent water from leaking inside the hull through the opening.

The mechanical seal 100 comprises a stationary part 1 connectable to the hull and a rotary part 2, coupled so as to rotate to the stationary part 1 and integrally with the drive shaft (R). The stationary part 1 and the rotary part 2 are provided with a stationary sliding annular element 10 and a rotary sliding annular element 20 respectively. Such sliding annular elements 10 and 20 are each one provided with a planar contact face, which contact faces are coplanar and placed in contact with each other to compose two sliding surfaces. The mechanical seal is further connected to the flushing fluid circuit 101 for cooling the sliding annular elements 10 and 20.

The monitoring apparatus of the present invention comprises the mechanical seal 100, a controller 3 and a plurality of sensors applied to the mechanical seal device 100 for detecting operating parameters of the mechanical seal device and for generating corresponding control signals. Sensors transmit control signals to the controller 3.

Among the sensors there is provided an axial vibration sensor 40, for detecting the vibrations in the axial direction of the mechanical seal, that is in axial direction of the drive shaft (R). Preferably the axial vibration sensor 40 detects the axial vibrations of the stationary part 1. Such sensor can be an inertial sensor, such as for instance an accelerometer, from which it is possible to obtain the vibration speed by integration. The axial vibration sensor 40 generates a value in mm/s.

Among the sensors there is further provided a radial vibration sensor 41, for detecting the vibrations in the radial direction of the mechanical seal, that is in radial direction of the drive shaft (R), perpendicular to said axial direction. Preferably the radial vibration sensor 41 detects the radial vibrations of the stationary part 1. Such sensor can be an inertial sensor, such as for instance an accelerometer, from which it is possible to obtain the vibration speed by integration. The radial vibration sensor 40 generates a value in mm/s.

Among the sensors there is further provided a wear sensor for the contact faces 42. Wear is measured in mm and it denotes how much the faces have withdrawn during sliding, that is how much the sliding annular element has worn out and therefore has grown thin. Such measurement can consider both the sliding annular elements 10 and 20, or only one of them, typically the rotary annular element 20, that is urged by elastic means such as springs or the like against the stationary annular element 10.

Among the sensors there is further provided a temperature sensor for the sliding surfaces 43. Such sensor can comprise for instance a thermocouple, and it generates a value in °C.

Among the sensors there is further provided a sensor for the revolutions of said drive shaft 44. Such sensor for instance can be a revolution indicator applied to the rotary part 2 of the mechanical seal. As an alternative the number of revolutions can be obtained by the engine 9, preferably by the dedicated controller 90 or by the reduction unit 103.

Among the sensors there are further provided a flushing fluid pressure sensor 45, a flushing fluid temperature sensor 46 and a flushing fluid flow rate sensor 47. The flushing fluid typically is water. Such water usually is conveyed from the engine 9, it passes through the mechanical seal 100, lubricating and cooling the sliding annular elements 10 and 20, and then it flows out in sea.

Control signals generated by the sensors are sent to the controller 3. The controller 3 comprises a comparing unit 30 for comparing the values taken by each control signal with corresponding threshold values or reference ranges. Values or reference ranges are stored in a memory unit or database 31 and can be entered or modified by a setting unit 5. The comparing unit 30 generates an alarm signal if values exceed threshold values and/or fall out from reference ranges.

For instance if the pressure of the flushing fluid increases too much, the risk of having failures in the mechanical seal 100 increases in a corresponding manner. If on the contrary the pressure of the flushing fluid drops, it means that probably an interruption in the flushing circuit has occurred, and supply and/or discharge of liquid to or from the seal 100 are interrupted. In this case also the temperature of the sliding surfaces can rise. A combined display of such values allows the user to rapidly make a diagnosis and to perform suitable operations to face the abnormal condition.

The controller 3 is further provided with a computation unit 32 and therefore it is configured such to estimate the residual life time of the mechanical seal device on the basis of the control signals received from the sensors.

The computation unit 32 operates by means of an algorithm characterized by a transfer function allowing to pass from quantities that can be transduced from field, that is values detected by sensors, to a time value denoting the residual life of the mechanical seal. In a preferred embodiment, the residual time is calculated as the time exceeding which the mechanical seal will have a failure with a confidence of 5%.

The transfer function is the sum of a number of computation blocks in a number equal to the number of quantities under examination, in this specific case of the preferred embodiment eight quantities detected by the same number of sensors. However it is possible to provide a greater number of quantities under examination, to increase the reliability of the estimate.

Each computation block is about a specific physical quantity and it is composed of a multiplication of two factors. The first factor is a nonlinear combination of all the physical quantities; the second factor is related to the physical quantity under examination, which is managed by an exponential function. Each computation block related to a physical quantity thus comprises a contribution of all the other physical quantities, since the physical quantities are not independent from each other, but they affect each other.

An example of a computation block, related to physical quantity A (temperature of the sliding surfaces) is as follows:

$$\left( [a_9]A^{[a_{18}]^3+[a_{19}]^2+[a_{20}]} + [a_{10}]B^{[a_{21}]^3+[a_{21}]^2+[a_{23}]} + [a_{11}]C^{[a_{24}]^3+[a_{25}]^2+[a_{26}]} \right.$$

$$+ [a_{12}]D^{[a_{27}]^3+[a_{28}]^2+[a_{29}]} + [a_{13}]E^{[a_{30}]^3+[a_{31}]^2+[a_{32}]}$$

$$+ [a_{14}]F^{[a_{33}]^3+[a_{34}]^2+[a_{35}]} + [a_{15}]G^{[a_{36}]^3+[a_{37}]^2+[a_{38}]}$$

$$+ \left. [a_{16}]H^{[a_{39}]^3+[a_{40}]^2+[a_{41}]} + [a_{17}] \right)$$

$$\times \left( A^{[a_1]^3+[a_2]^2+[a_3]} + [a_4]A + [a_5] \right)^{[a_6]^3+[a_7]^2+[a_8]}$$

wherein:

A is the temperature of the sliding surfaces;
B is the temperature of the flushing fluid;
C is the number of revolutions of the shaft;
D is the radial vibration;
E is the axial vibration;
F is the wear of the annular sliding elements;
G is the pressure of the flushing fluid;
H is the flow rate of the flushing fluid.

Coefficients $a_1$ to $a_{41}$ are constant depending on the type and size of the seal. Even if the formula is as much general as possible, many constants can be at 0, simplifying a lot the computation.

By means of a display 6 a graphic panel is displayed showing the values detected by the sensors and the value of the residual operating life time estimated by the computation unit 32. The detected values are displayed in predetermined fields, preferably marked by tags showing the sensor from which they are generated and the unit of measure. Such fields have a green background if values are below threshold values or fall within the predetermined ranges of reference. If the comparing unit 30 indicates on the contrary values above the threshold value or outside reference ranges by means of the alarm signal, the background colour of the field can be set to yellow or red depending on the severity of the abnormal condition.

The controller 3 can communicate with the display 6 by cable or by a satellite or wireless communication. This allows for example to arrange a control room where performances of the propulsion systems can be monitored in real time, in particular of one or more mechanical seals, of one or more watercrafts, such as for example a fleet of fishing boats. Thus the ship-owner is aware of the operating condition of the mechanical seals and of the estimates of their residual time and therefore he/she can act in advance or immediately in case of failures and can plan a maintenance schedule allowing costs to be optimized.

The comparing unit 30 can compare also the value of the estimate of the residual life time calculated by the computation unit 32 with threshold values; thus also the field showing the estimate of the residual time can be displayed in yellow or red depending on the decrease of the calculated residual life time.

The memory unit 31 further stores the values taken by the control signals. In a preferred embodiment, the memory unit stores the detected values about the last thirty days. The computation unit performs the estimate of the residual operating life time of the mechanical seal device and therefore it is a predictive system. Such estimate is performed on the basis of values within a predetermined period, extending by a predetermined length prior the computation moment. The setting unit 5 allows the user to set the period on which the residual life time has to be estimated. In one embodiment the apparatus provides two predetermined settings alternated to each other: the last twenty-four hours or the last seven days. The data contained in the memory unit 31 can be downloaded remotely by a connection or by USB key or memory card, for later computations or analyses.

The apparatus can further comprise a feedback unit 7, controlled by the controller 3. Such feedback unit 7 allows reply actions to abnormal conditions detected by the controller 3 to be operated. In one embodiment the feedback unit 7 is a control unit of the engine 9 and it can turn the engine or engines off, or it can decrease the number of revolutions to a value tolerable for the damaged mechanical seal 100 and/or for a further damaged component. The controller 3 is configured such to control the engine 9 on the basis of the values taken by the control signals. For example in the case of a damage of the mechanical seal 100 resulting in water entering the hull, the feedback unit 7 can control the engine 9 to turn off and contemporaneously activate a safety system with inflatable gasket 105 with an air chamber for isolating the hull. In this case the propulsion system comprises an inflatable gasket 105 placed about the drive shaft R at the opening and means for activating the inflatable gasket by the controller. In case of failure detected by the comparing unit 31, the controller sets to zero the revolutions of the engine 9 by the control means and it drives the inflation of the inflatable gasket 105 by the activation means. If for instance the pressure of the flushing liquid entering the mechanical seal 100 has a deep drop, the mechanical seal 100 can burn and be damaged. In this case it can be advantageous to provide the emergency procedure that stops the engine 9 and drives the inflatable gasket 105.

Preferably there are provided means for a user to validate the control means of the engine, such that the user on the basis of the values displayed on the graphic panel can give the consent to the control means of the engine. The display 6 where the graphic panel is displayed can be a touchscreen, allowing the user to see emergency communications, and to give the consent to actions in reply to emergency.

In a further embodiment, the controller 3 receives control signals from other components of the propelling line, for instance from the engine 9. To this end the controller 3 can interface the dedicated controller of the engine 90. The apparatus thus monitors through the controller 3 the whole propulsion line, and by the feedback unit 7 it performs actions in reply to the detected abnormal conditions.

Figure 2 shows a diagram of the method of the present invention.

The method provides firstly the acquisition 80 of the control signals. The control signals comprise an axial vibration signal, a radial vibration signal, a wear signal of the contact faces, a temperature signal for the sliding surfaces, a signal of the revolutions of said drive shaft, a flushing fluid pressure signal, a flushing fluid temperature signal. The control signals further comprise a signal of the presence and amount of solid parts suspended in the oil of the reduction unit, a joint alignment signal, a joint vibration signal and a joint temperature signal.

Control signals are stored in a storing step 81, then an estimate 84 of the residual life time of the mechanical seal device is performed on the basis of the received and stored control signals.

The user can set the period 85 that has to be considered for estimating the residual time.

At the same manner the comparison 82 of the values taken by each control signal is performed with threshold values or reference ranges, for generating an alarm signal if values exceed threshold values and/or fall out from reference ranges.

Also in this case it is possible for the user to set the threshold values or the reference ranges 85 on the basis of the technical characteristics of the mechanical seal.

Therefore a display 86 of the values detected by acquisition step 80 is performed, which are highlighted in a predetermined manner on the basis of the results of the comparison 82 and on the value resulting from the estimate of the residual life time.

Finally it is possible to carry out a feedback step 87, where actions are carried out in response to the detected abnormal conditions.

## Claims

1. Apparatus for monitoring one or more components of a watercraft propelling system, at least one of said components being composed of a mechanical seal device (100) for a drive shaft (R) extending through an opening in a watercraft hull, said device being intended to prevent water from leaking inside said hull through said opening, said drive shaft (R) being rotatable about an axis of rotation coinciding with its longitudinal axis,

   which mechanical seal device (100) comprises a stationary part (1) connectable to said hull and a rotary part (2), coupled so as to rotate to said stationary part (1) and integrally connected to said drive shaft, the stationary part (1) and the rotary part (2) being provided with a stationary annular sliding element (10) and a rotary annular sliding element (20) respectively, said annular sliding elements (10, 20) being provided each one with a planar contact face (100, 200) and the two contact faces (100, 200) being coplanar and in contact with each other,

**characterized in that**

it comprises a controller (3) and a plurality of sensors (40, 41, 42, 43, 44, 45, 46, 47) for detecting operating parameters of said one or more components and for generating corresponding control signals, which sensors are configured so as to transmit the control signals to the controller (3), wherein sensors comprise sensors detecting the operating parameters of the mechanical seal device (100),

said sensors comprising a wear sensor for the contact faces, which wear sensor is arranged for measuring the wear of one or both the annular elements so as to denote how much the faces have withdrawn during sliding and how much one or both the annular elements have worn out and therefore have grown thin,

wherein said controller (3) is set such to carry out an estimate of the residual time of the operating life of the mechanical seal device (100) on the basis of the said control signals.

2.  Apparatus according to claim 1, wherein the watercraft propelling system comprises a flushing fluid circuit (101) for lubricating and cooling the mechanical seal device (100) and sensors comprise sensors for detecting operating parameters of the flushing fluid circuit.

3.  Apparatus according to one or more of the preceding claims, wherein at least one of said components is composed of a reduction unit (103) for the revolutions of the engine and sensors comprise sensors for detecting operating parameters of said reduction unit, and wherein at least one of said components is composed of a joint (102) connecting the drive shaft (R) to the reduction unit (103) and the sensors comprise sensors for detecting operating parameters of said joint.

4.  Apparatus according to one or more of the preceding claims, wherein said controller (3) comprises a comparing unit (31) for comparing values taken by each control signal with corresponding threshold values or ranges of reference and for generating an alarm signal if values exceed threshold values and/or fall out from reference ranges, and the apparatus comprises a display (6) for displaying a graphic panel showing said values, the values being highlighted in a predetermined mode in the cases when the alarm signal generated by the comparing unit (31) is active.

5.  Apparatus according to one or more of the preceding claims, wherein the controller (3) comprises control means for an engine (9) that is part of the propelling system, the controller (3) being configured such to control the engine (9) on the basis of the values taken by the control signals.

6.  Apparatus according to claim 5, comprising means for the user to validate the means controlling the engine, such that the user on the basis of the values displayed on the graphic panel can give the consent to the engine control means.

7.  Apparatus according to claim 7, wherein the propelling system comprises an inflatable gasket (105) placed about the drive shaft (R) at the opening and means for activating the inflatable gasket by the controller (3), the controller (3) being set such that, in case of failure detected by the comparing unit (31), the controller (3) sets to zero the revolutions of the engine (9) by means of the control means and operates the inflation of the inflatable gasket (105) by the activation means.

8.  Apparatus according to one or more of the preceding claims, wherein said controller (3) comprises a memory unit (30) where the values taken by the control signals are stored, and the estimate of the residual time of the operating life of the mechanical seal device (100) being performed on the basis of said values within a predetermined period, and wherein said controller (3) comprises means (5) for the user to set said period.

9.  Method for monitoring one or more components of a watercraft propelling system using the apparatus of claim 1, at least one of said components being composed of a mechanical seal device,

**characterized in that**

it provides to acquire control signals and to compare the values taken by each control signal with corresponding threshold values or ranges of reference, for generating an alarm signal if values exceed threshold values and/or fall out from reference ranges.

10. Method according to claim 9, wherein one component is an engine, which engine is controlled on the basis of the values taken by the control signals.

**11.** Method according to claim 10, wherein values taken by each control signal are displayed and a user, on the basis of the displayed values, can give the consent to control the engine.

**12.** Method according to claim 11, wherein the propelling system comprises an inflatable gasket and in case of a detected abnormal condition, the revolutions of the engine are set to zero and the inflation of the inflatable gasket is operated.

**13.** Method according to one or more of the preceding claims 9 to 12, wherein the residual time of the operating life of the mechanical seal device (100) is estimated on the basis of the received control signals, wherein the estimate of the residual time of the operating life of the mechanical seal device uses a transfer function composed of the sum of a number of computation blocks equal to the number of the physical quantities under examination, wherein each computation block is related to a specific physical quantity and is composed of a multiplication of a first factor comprising a nonlinear combination of all the physical quantities under examination with a second factor depending exclusively on the specific physical quantity.

**Patentansprüche**

**1.** Vorrichtung zum Überwachen eines oder mehrerer Bestandteile eines Wasserfahrzeugantriebssystems, wobei mindestens einer der Bestandteile aus einer Gleitringdichtungsvorrichtung (100) für eine Antriebswelle (R) besteht, die sich durch eine Öffnung in einem Wasserfahrzeugrumpf erstreckt, wobei die Vorrichtung dazu bestimmt ist, das Austreten von Wasser in den Rumpf durch die Öffnung zu verhindern, wobei die Antriebswelle (R) um eine Drehachse drehbar ist, die mit ihrer Längsachse zusammenfällt,

wobei diese Gleitringdichtungsvorrichtung (100) ein stationäres Teil (1), das mit dem Rumpf verbunden werden kann, und ein rotierendes Teil (2) umfasst, das drehbar mit dem stationären Teil (1) gekoppelt und integral mit der Antriebswelle verbunden ist,
der stationäre Teil (1) und der rotierende Teil (2) jeweils mit einem ringförmigen stationären Gleitelement (10) und einem ringförmigen rotierenden Gleitelement (20) vorgesehen sind, wobei die ringförmigen Gleitelemente (10, 20) jeweils mit einer ebenen Kontaktfläche (100, 200) versehen sind und die beiden Kontaktflächen (100, 200) koplanar sind und miteinander in Verbindung stehen,
**dadurch gekennzeichnet, dass**
sie eine Steuerung (3) und mehrere Sensoren (40, 41, 42, 43, 44, 45, 46, 47) zum Erkennen von Betriebsparametern des einen oder der mehreren Bestandteile und zum Erzeugen entsprechender Steuersignale umfasst, wobei die Sensoren so konfiguriert sind, dass sie die Steuersignale an die Steuerung (3) übertragen, wobei die Sensoren zum Erkennen der Betriebsparameter der Gleitringdichtungsvorrichtung (100) Sensoren umfassen, wobei die Sensoren einen Verschleißsensor für die Verbindungsflächen umfassen, der zur Messung des Verschleißes eines oder beider ringförmiger Elemente eingerichtet ist, um anzuzeigen, wie weit sich die Flächen während des Gleitens zurückgezogen haben und wie weit eines oder beide ringförmigen Elemente verschlissen und daher dünn geworden sind,
wobei die Steuerung (3) so eingestellt ist, dass sie eine Schätzung der Restzeit der Betriebslebensdauer der Gleitringdichtungsvorrichtung (100) auf der Grundlage der Steuersignale durchführt.

**2.** Vorrichtung nach Anspruch 1, wobei das Wasserfahrzeugantriebssystem einen Spülfluidkreislauf (101) zum Schmieren und Kühlen der Gleitringdichtungsvorrichtung (100) umfasst und Sensoren zum Erkennen von Betriebsparametern des Spülfluidkreislaufs umfassen.

**3.** Vorrichtung nach einem oder mehreren der vorhergehenden Ansprüche, wobei mindestens einer der Bestandteile aus einem Untersetzungsgetriebe (103) für die Drehzahlen des Motors besteht und die Sensoren zum Erkennen von Betriebsparametern des Untersetzungsgetriebes Sensoren umfassen, und wobei mindestens einer der Bestandteile aus einem Gelenk (102) besteht, das die Antriebswelle (R) mit dem Untersetzungsgetriebe (103) verbindet und die Sensoren zum Erkennen von Betriebsparametern des Gelenks Sensoren umfassen.

**4.** Vorrichtung nach einem oder mehreren der vorhergehenden Ansprüche, wobei die Steuerung (3) eine Vergleichseinheit (31) zum Vergleichen von Werten, die von jedem Steuerungssignal erfasst werden, mit entsprechenden Schwellenwerten oder Referenzbereichen und zum Erzeugen eines Alarmsignals umfasst, wenn Werte Schwellenwerte überschreiten und/oder aus Referenzbereichen herausfallen, und die Vorrichtung eine Anzeige (6) zum Anzeigen einer grafischen Panel, die die Werte zeigt, umfasst, wobei die Werte in einem vorbestimmten Modus in den Fällen hervorgehoben werden, wenn das von der Vergleichseinheit (31) erzeugte Alarmsignal aktiv ist.

**5.** Vorrichtung nach einem oder mehreren der vorhergehenden Ansprüche, wobei die Steuerung (3) ein Steuermittel für einen Motor (9) umfasst, der Teil des Antriebssystems ist, wobei die Steuerung (3) so konfiguriert ist, dass sie den Motor (9) auf der Grundlage der von den Steuersignalen erfassten Werte steuert.

**6.** Vorrichtung nach Anspruch 5, umfassend Mittel für den Benutzer, um das Mittel, das den Motor steuert, zu validieren, sodass der Benutzer auf Grundlage der auf dem grafischen Panel angezeigten Werte die Zustimmung an das Motorsteuermittel geben kann.

**7.** Vorrichtung nach Anspruch 7, **dadurch gekennzeichnet, dass** das Antriebssystem eine aufblasbare Dichtung (105), die um die Antriebswelle (R) an der Öffnung platziert ist, und Mittel zur Aktivierung der aufblasbaren Dichtung durch die Steuerung (3) umfasst, wobei die Steuerung (3) so eingestellt ist, dass im Fall eines von der Vergleichseinheit (31) erkannten Fehlers die Steuerung (3) die Drehzahl des Motors (9) mittels der Steuerungsmittel auf Null setzt und das Aufblasen der aufblasbaren Dichtung (105) durch die Aktivierungsmittel bewirkt.

**8.** Vorrichtung nach einem oder mehreren der vorhergehenden Ansprüche, wobei die Steuerung (3) eine Speichereinheit (30) umfasst, in der die von den Steuersignalen erfassten Werte gespeichert werden, und wobei die Schätzung der Restzeit der Betriebsdauer der Gleitringdichtungsvorrichtung (100) auf der Grundlage dieser Werte innerhalb eines vorbestimmten Zeitraums durchgeführt wird, und wobei die Steuerung (3) Mittel (5) umfasst, mit denen der Benutzer diesen Zeitraum einstellen kann.

**9.** Verfahren zum Überwachen einer oder mehrerer Bestandteile eines Wasserfahrzeugantriebssystems unter Verwendung der Vorrichtung nach Anspruch 1, wobei mindestens einer der Bestandteile aus einer Gleitringdichtungsvorrichtung besteht,
**dadurch gekennzeichnet, dass**
dass es die Aufnahme von Steuersignalen und den Vergleich der von jedem Steuersignal erfassten Werte mit entsprechenden Schwellenwerten oder Referenzbereichen vorsieht, um ein Alarmsignal zu erzeugen, wenn die Werte die Schwellenwerte überschreiten und/oder aus den Referenzbereichen herausfallen.

**10.** Verfahren nach Anspruch 9, wobei eine Komponente ein Motor ist, der auf der Grundlage der von den Steuersignalen erfassten Werte gesteuert wird.

**11.** Verfahren nach Anspruch 10, wobei die von jedem Steuersignal erfassten Werte angezeigt werden und ein Benutzer auf der Grundlage der angezeigten Werte die Zustimmung zur Steuerung des Motors geben kann.

**12.** Verfahren nach Anspruch 11, wobei das Antriebssystem eine aufblasbare Dichtung umfasst und im Fall eines erkannten anormalen Zustands die Drehzahl des Motors auf Null gesetzt und das Aufblasen der aufblasbaren Dichtung betätigt wird.

**13.** Verfahren nach einem oder mehreren der vorhergehenden Ansprüche 9 bis 12, wobei die Restzeit der Betriebsdauer der Gleitringdichtungsvorrichtung (100) auf der Grundlage der empfangenen Steuersignale geschätzt wird, wobei die Schätzung der Restzeit der Betriebsdauer der Gleitringdichtungsvorrichtung eine Übertragungsfunktion verwendet, die sich aus der Summe einer Anzahl von Berechnungsblöcken zusammensetzt, die gleich der Anzahl der untersuchten physikalischen Größen ist, wobei sich jeder Berechnungsblock auf eine spezifische physikalische Größe bezieht und aus einer Multiplikation eines ersten Faktors, der eine nichtlineare Kombination aller untersuchten physikalischen Größen umfasst, mit einem zweiten Faktor, der ausschließlich von der spezifischen physikalischen Größe abhängt, zusammengesetzt ist.

**Revendications**

**1.** Appareil pour surveiller un ou plusieurs composants d'un système de propulsion de motomarine, au moins un desdits composants étant composé d'un dispositif d'étanchéité mécanique (100) pour un arbre d'entraînement (R) s'étendant à travers une ouverture dans une coque de motomarine, ledit dispositif étant destiné à empêcher l'eau de fuir à l'intérieur de ladite coque à travers ladite ouverture, ledit arbre d'entraînement (R) pouvant tourner autour d'un axe de rotation coïncidant avec son axe longitudinal,

lequel dispositif d'étanchéité mécanique (100) comprend une partie fixe (1) pouvant être reliée à ladite coque et une partie rotative (2), couplée de manière à tourner vers ladite partie fixe (1) et intégralement reliée audit arbre d'entraînement,

la partie fixe (1) et la partie rotative (2) étant munies d'un élément coulissant annulaire fixe (10) et d'un élément coulissant annulaire rotatif (20) respectivement, lesdits éléments coulissants annulaires (10, 20) étant munis chacun d'une face de contact plane (100, 200) et les deux faces de contact (100, 200) étant coplanaires et en contact l'une avec l'autre,

**caractérisé en ce qu'**

il comprend un contrôleur (3) et une pluralité de capteurs (40, 41, 42, 43, 44, 45, 46, 47) pour détecter les paramètres de fonctionnement dudit ou desdits composants et pour générer des signaux de commande correspondants, lesquels capteurs sont configurés de manière à transmettre les signaux de commande au contrôleur (3), dans lequel les capteurs comprennent des capteurs détectant les paramètres de fonctionnement du dispositif d'étanchéité mécanique (100),

lesdits capteurs comprenant un capteur d'usure pour les faces de contact, lequel capteur d'usure est disposé pour mesurer l'usure de l'un ou des deux éléments annulaires de manière à indiquer dans quelle mesure les faces se sont retirées pendant le coulissement et dans quelle mesure l'un ou les deux éléments annulaires se sont usés et sont donc devenus minces,

dans lequel ledit contrôleur (3) est réglé de manière à effectuer une estimation du temps résiduel de la durée de vie de fonctionnement du dispositif d'étanchéité mécanique (100) sur la base desdits signaux de commande.

2. Appareil selon la revendication 1, dans lequel le système de propulsion de motomarine comprend un circuit de fluide de rinçage (101) pour lubrifier et refroidir le dispositif d'étanchéité mécanique (100) et les capteurs comprennent des capteurs pour détecter les paramètres de fonctionnement du circuit de fluide de rinçage.

3. Appareil selon une ou plusieurs des revendications précédentes, dans lequel au moins un desdits composants est composé d'une unité de réduction (103) pour les révolutions du moteur et les capteurs comprennent des capteurs pour détecter des paramètres de fonctionnement de ladite unité de réduction, et dans lequel au moins un desdits composants est composé d'un joint (102) reliant l'arbre d'entraînement (R) à l'unité de réduction (103) et les capteurs comprennent des capteurs pour détecter des paramètres de fonctionnement dudit joint.

4. Appareil selon une ou plusieurs des revendications précédentes, dans lequel ledit contrôleur (3) comprend une unité de comparaison (31) pour comparer les valeurs prises par chaque signal de commande avec des valeurs de seuil ou des plages de référence correspondantes et pour générer un signal d'alarme si les valeurs dépassent les valeurs de seuil et/ou tombent hors des plages de référence, et l'appareil comprend un affichage (6) pour afficher un panneau graphique montrant lesdites valeurs, les valeurs étant mises en évidence dans un mode prédéterminé dans les cas où le signal d'alarme généré par l'unité de comparaison (31) est actif.

5. Appareil selon une ou plusieurs des revendications précédentes, dans lequel le contrôleur (3) comprend un moyen de commande pour un moteur (9) qui fait partie du système de propulsion, le contrôleur (3) étant configuré de manière à commander le moteur (9) sur la base des valeurs prises par les signaux de commande.

6. Appareil selon la revendication 5, comprenant des moyens pour que l'utilisateur valide les moyens de commande du moteur, de sorte que l'utilisateur sur la base des valeurs affichées sur le panneau graphique puisse donner le consentement aux moyens de commande du moteur.

7. Appareil selon la revendication 7, dans lequel le système de propulsion comprend un joint gonflable (105) placé autour de l'arbre d'entraînement (R) au niveau de l'ouverture et des moyens pour activer le joint gonflable par le contrôleur (3), le contrôleur (3) étant réglé de telle sorte que, en cas de défaillance détectée par l'unité de comparaison (31), le contrôleur (3) règle à zéro les révolutions du moteur (9) au moyen des moyens de commande et actionne le gonflage du joint gonflable (105) par les moyens d'activation.

8. Appareil selon une ou plusieurs des revendications précédentes, dans lequel ledit contrôleur (3) comprend une unité de mémoire (30) où les valeurs prises par les signaux de commande sont stockées, et l'estimation du temps résiduel de la durée de vie de fonctionnement du dispositif d'étanchéité mécanique (100) étant effectuée sur la base desdites valeurs dans une période prédéterminée, et dans lequel ledit contrôleur (3) comprend des moyens (5) pour que l'utilisateur règle ladite période.

9. Procédé de surveillance d'un ou plusieurs composants d'un système de propulsion de motomarine utilisant l'appareil selon la revendication 1, au moins l'un desdits composants étant composé d'un dispositif d'étanchéité mécanique, **caractérisé en ce qu'**

il permet d'acquérir des signaux de commande et de comparer les valeurs prises par chaque signal de commande avec des valeurs de seuil ou des plages de référence correspondantes, pour générer un signal d'alarme si les valeurs dépassent les valeurs de seuil et/ou tombent hors des plages de référence.

10. Procédé selon la revendication 9, dans lequel un composant est un moteur, lequel moteur est commandé sur la base des valeurs prises par les signaux de commande.

11. Procédé selon la revendication 10, dans lequel les valeurs prises par chaque signal de commande sont affichées et un utilisateur, sur la base des valeurs affichées, peut donner le consentement pour commander le moteur.

12. Procédé selon la revendication 11, dans lequel le système de propulsion comprend un joint gonflable et dans le cas d'un état anormal détecté, les révolutions du moteur sont mises à zéro et le gonflage du joint gonflable est opéré.

13. Procédé selon une ou plusieurs des revendications précédentes 9 à 12, dans lequel le temps résiduel de la durée de vie de fonctionnement du dispositif d'étanchéité mécanique (100) est estimé sur la base des signaux de commande reçus, dans lequel l'estimation du temps résiduel de la durée de vie de fonctionnement du dispositif d'étanchéité mécanique utilise une fonction de transfert composée de la somme d'un nombre de blocs de calcul égal au nombre des quantités physiques examinées, dans lequel chaque bloc de calcul est lié à une quantité physique spécifique et est composé d'une multiplication d'un premier facteur comprenant une combinaison non linéaire de toutes les quantités physiques examinées avec un second facteur dépendant exclusivement de la quantité physique spécifique.

Fig. 1

41 Radial vibration

42 Wear

43 Temperature of sliding surfaces

5 Setting

100

1

10

20

2

3 CPU

30 DB

44 Revolutions

31 Comparison

32 Computation

105

45 Flushing fluid pressure

Display

6

46 Flushing fluid temperature

7 Feedback

47 Flushing fluid flow rate

40 Axial vibration

Fig. 2

80

Acquisition

83

81

85

Threshold value setting

Storage

Period setting

Comparison

Computation

82

84

Display ~86

Feedback ~87

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6615639 B